# EUROPEAN PATENT APPLICATION

(11) **EP 4 422 313 A1**
(43) Date of publication of application: **28.08.2024**
(21) Application number: 22884091.4
(22) Date of filing: 21.10.2022
(51) Int. Cl.: H04W 72/04, H04W 76/14, H04B 7/0413, H04B 7/0404

(54) **DEVICE AND METHOD FOR TRANSMITTING SIDELINK DATA IN MULTIPLE ANTENNA SYSTEM**

(30) Priority: 22.10.2021 KR 20210141613; 20.10.2022 KR 20220135658
(71) Applicant: Industry-Academic Cooperation Foundation Dankook University, Yongin-si, Gyeonggi-do 16890 (KR)
(72) Inventor: CHOI, Su Han, Gwacheon-si Gyeonggi-do 13839 (KR)
(74) Representative: Frenkel, Matthias Alexander
(86) International application number: PCT/KR2022/016147
(87) International publication number: WO 2023/068869

(57) **Abstract**

A LoS MIMO system can be applied to all frequency bands used in general mobile communication. Particularly, the LoS MIMO system is very important in high frequency bands (for example, 10 GHz-100 GHz, or three-digit GHz OR Tera-Hz (THz)). Therefore, the present specification proposes a method and a device for performing sidelink communication on the basis of LoS MIMO applicable to a next generation wireless communication system.

## Description

### [TECHNICAL FIELD]

The present disclosure relates to wireless communication, and more particularly, to a method and apparatus for transmitting sidelink data in a multi-antenna system.

### [BACKGROUND ART]

As smartphones and IoT (Internet of Things) UEs have rapidly spread, the amount of information exchanged through communication networks has increased. Accordingly, in the next-generation radio access technology, an environment that provides faster services (e.g., enhanced mobile broadband communication) to more users than existing communication systems (or existing radio access technology) needs to be considered. To this end, a communication system considering machine-type communications (MTC), providing services by connecting multiple devices and objects, has been developed. In addition, a communication system (e.g., ultra-reliable and low latency communications (URLLC) considering services and/or UEs that are sensitive to communication reliability and/or latency has been developed.

### [DETAILED DESCRIPTION OF INVENTION]

### [TECHNICAL PROBLEMS]

A sidelink communication performing method based on line-of-sight multiple input and multiple output (LoS MIMO) applicable to next-generation wireless communication systems is required.

### [TECHNICAL SOLUTION]

Accordingly, the present disclosure proposes a method and device for performing sidelink communication based on line-of-sight multiple input and multiple output (LoS MIMO) applicable to next-generation wireless communication systems.

According to an embodiment, provided is a method performed by a first user equipment in a wireless communication system supporting line of sight (LoS) multiple input multiple output (MIMO), the method comprising: receiving configuration information related to the LoS MIMO from a base station, and performing sidelink communication based on the LoS MIMO with a second user equipment based on the configuration information, wherein the LoS MIMO is MIMO that supports LoS-based multiple layer transmission and reception, and wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

According to an embodiment, provided is a first user equipment (UE), in a wireless communication system supporting line of sight (LoS) multiple input multiple output (MIMO), the first user equipment comprising: one or more memories storing instructions; one or more transceivers; and one or more processors connecting the one or more memories to the one or more transceivers, wherein the one or more processors are configured to execute the instructions to receive configuration information related to the LoS MIMO from a base station, and perform sidelink communication based on the LoS MIMO with a second user equipment based on the configuration information, wherein the LoS MIMO is MIMO that supports LoS-based multiple layer transmission and reception, and wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

According to an embodiment, provided is an apparatus configured to control a first user equipment in a wireless communication system supporting line of sight (LoS) multiple input multiple output (MIMO), the apparatus comprising: one or more processors; and one or more memories connected to executable by the one or more processors and storing instructions, wherein the one or more processors are configured to execute the instructions to receive configuration information related to the LoS MIMO from a base station, and perform sidelink communication based on the LoS MIMO with a second user equipment based on the configuration information, wherein the LoS MIMO is MIMO that supports LoS-based multiple layer transmission and reception, and wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

### [EFFECT OF INVENTION]

When performing MIMO-based communication, a transfer rate of sidelink data may be improved by forming multiple layers even in a LoS environment.

### [BRIEF DESCRIPTION OF THE DRAWING]

FIG. 1 is a conceptual diagram illustrating a wireless communication system according to an embodiment of the present disclosure.
FIG. 2 is a diagram illustrating a 3GPP 5G system to which a data transmission method according to an embodiment of the present disclosure may be applied.
FIG. 3 is a diagram illustrating a resource grid supported by a radio access technology to which an embodiment of the present disclosure may be applied.
FIG. 4 is a diagram illustrating a bandwidth part (BWP) supported by a radio access technology to which an embodiment of the present disclosure may be applied.
FIG. 5 is a diagram illustrating a synchronization signal block in a radio access technology to which an embodiment of the present disclosure may be applied.
FIG. 6 is a diagram illustrating the principle of a vertical-horizontal (V-H) polarization antenna.
FIG. 7 shows a light-of-sight (LoS) multiple input multiple output (MIMO) system used for microwave transmission according to an example.
FIG. 8 is a flowchart illustrating a LoS MIMO setting procedure for a sidelink according to an example.
FIG. 9 is a flowchart illustrating a LoS MIMO setting procedure for a sidelink according to another example.
FIG. 10 is a flowchart illustrating a LoS MIMO setting procedure for a sidelink according to another example.
FIG. 11 is a flowchart illustrating a LoS MIMO setting procedure for a sidelink according to another example.
FIG. 12 is a flowchart illustrating a LoS MIMO control procedure for sidelink according to an example.
FIG. 13 is a flowchart illustrating a LoS MIMO control procedure for sidelink according to another example.
FIG. 14 is a flowchart illustrating a method for transmitting a sidelink demodulation reference signal (SL DM-RS) according to an example.
FIG. 15 is a flowchart illustrating a method for transmitting a sidelink channel state information reference signal (SL CSI-RS) according to an example.
FIG. 16 illustrates a transmitting UE and a receiving UE in which an embodiment of the present disclosure is implemented.

### [BEST MODE FOR CARRYING OUT THE INVENTION]

Since the present disclosure can make various changes and have various embodiments, specific embodiments will be illustrated in the drawings and described in detail in the detailed description. However, this is not intended to limit the present disclosure to specific embodiments and should be understood to include all changes, equivalents, and substitutes included in the spirit and technical scope of the present disclosure. In description of the drawings, similar reference numerals are used for similar components.

While terms, such as "first", "second", "A", "B", etc., may be used to describe various components in the present disclosure, such components must not be limited by the above terms. The above terms are used only to distinguish one component from another. For example, a first component may be referred to as a second component, and similarly, the second component may be referred to as the first component without departing from the scope of the present disclosure. The term "and/or" also includes any of a plurality of related stated items or a combination of a plurality of related stated items.

When an element is "coupled" or "connected" to another element, it should be understood that a third element may be present between the two elements although the element may be directly coupled or connected to the other element. When an element is "directly coupled" or "directly connected" to another element, it should be understood that no element is present between the two elements.

The terms used in the present disclosure are merely used in order to describe particular embodiments, and are not intended to limit the scope of the present disclosure. An element described in the singular form is intended to include a plurality of elements unless the context clearly indicates otherwise. In the present disclosure, it will be further understood that the terms "comprise" and "include" specify the presence of stated features, integers, steps, operations, elements, components, and/or combinations thereof, but do not preclude the presence or addition of one or more other features, integers, steps, operations, elements, components, and/or combinations.

Unless otherwise defined, all terms including technical and scientific terms used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and should not be interpreted in an idealized or overly formal sense unless expressly so defined herein.

Hereinafter, preferred embodiments according to the present disclosure will be described in detail with reference to the attached drawings.

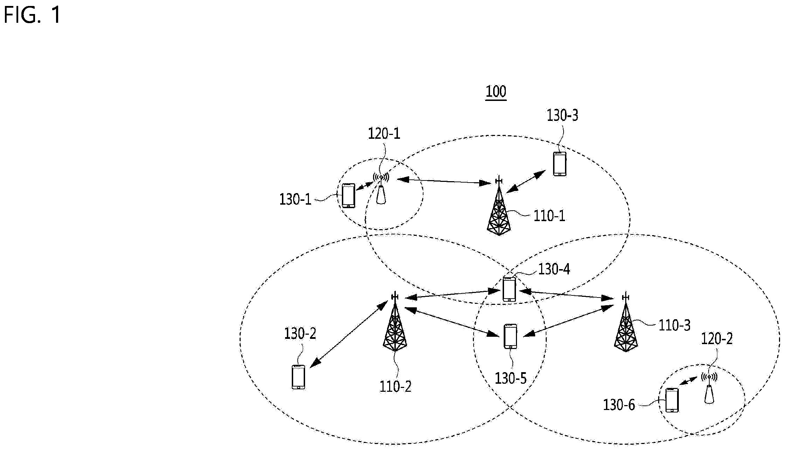

FIG. 1 is a conceptual diagram illustrating a wireless communication system according to an embodiment of the present disclosure.

Referring to FIG. 1, the wireless communication system 100 may include a plurality of communication nodes 110-1, 110-2, 110-3, 120-1, 120-2, 130-1, 130-2, 130-3, 130-4, 130-5, and 130-6.

Each of the plurality of communication nodes may support at least one communication protocol. For example, each of the plurality of communication nodes may support a communication protocol based on code division multiple access (CDMA), a communication protocol based on wideband CDMA (WCDMA), a communication protocol based on time division multiple access (TDMA), a communication protocol based on frequency division multiple access (FDMA), a communication protocol based on orthogonal frequency division multiplexing (OFDM), a communication protocol based on orthogonal frequency division multiple access (OFDMA), a communication protocol based on single carrier (SC)-FDMA, a communication protocol based on non-orthogonal multiple access (NOMA), a communication protocol based on space division multiple access (SDMA), etc.

The wireless communication system 100 may include a plurality of base stations 110-1, 110-2, 110-3, 120-1, and 120-2 and a plurality of user equipments (UEs) 130-1, 130-2, 130-3, 130-4, 130-5, and 130-6.

Each of the first base station 110-1, the second base station 110-2, and the third base station 110-3 may form a macro cell. Each of the fourth base station 120-1 and the fifth base station 120-2 may form a small cell. The fourth base station 120-1, the third UE 130-3, and the fourth UE 130-4 may belong to the coverage of the first base station 110-1. The second UE 130-2, the fourth UE 130-4, and the fifth UE 130-5 may belong to the coverage of the second base station 110-2. The fifth base station 120-2, the fourth UE 130-4, the fifth UE 130-5, and the sixth UE 130-6 may belong to the coverage of the third base station 110-3. The first UE 130-1 may belong to the coverage of the fourth base station 120-1. The sixth UE 130-6 may belong to the coverage of the fifth base station 120-2.

Here, each of the plurality of base stations 110-1, 110-2, 110-3, 120-1, and 120-2 may be referred to as a NodeB, an evolved NodeB, a next generation NodeB (gNB), a base transceiver station (BTS), a radio base station, a radio transceiver, an access point, an access node, a road side unit (RSU), a digital unit (DU), a cloud digital unit (CDU), a radio remote head (RRH), a radio unit (RU), a transmission point (TP), a transmission and reception point (TRP), a relay node, or the like. Each of the plurality of UEs 130-1, 130-2, 130-3, 130-4, 130-5 and 130-6) may be referred to as a terminal, an access terminal, a mobile terminal, a station, a subscriber station, a mobile station, a portable subscriber station, a node, a device, or the like.

Each of the plurality of communication nodes 110-1, 110-2, 110-3, 120-1, 120-2, 130-1, 130-2, 130-3, 130-4, 130-5, and 130-6 may support cellular communication (e.g., long term evolution (LTE), LTE-advanced (LTE-A), New Radio (NR), etc. specified in the 3rd generation partnership project (3GPP) standard). The plurality of base stations 110-1, 110-2, 110-3, 120-1, and 120-2 may operate in different frequency bands or may operate in the same frequency band. The plurality of base stations 110-1, 110-2, 110-3, 120-1, and 120-2) may be connected to each other through ideal backhaul or non-ideal backhaul and may exchange information through the ideal backhaul or non-ideal backhaul. Each of the plurality of base stations 110-1, 110-2, 110-3, 120-1, and 120-2 may be connected to a core network (not shown) through ideal backhaul or non-ideal backhaul. Each of the plurality of base stations 110-1, 110-2, 110-3, 120-1, and 120-2 may transmit a signal received from the core network to the corresponding UE 130-1, 130-2, 130-3, 130-4, 130-5, or 130-6) and transmit a signal received from the corresponding UE 130-1, 130-2, 130-3, 130-4, 130-5, or 130-6 to the core network, can be transmitted to.

Each of the plurality of base stations 110-1, 110-2, 110-3, 120-1, and 120-2 may support downlink transmission based on OFDM or other transmission schemes. In addition, each of the plurality of base stations 110-1, 110-2, 110-3, 120-1, and 120-2 may support uplink transmission based on OFDM, DFT-Spread-OFDM or other transmission schemes. In addition, each of the plurality of base stations 110-1, 110-2, 110-3, 120-1, and 120-2 may support Multiple Input Multiple Output (MIMO) (e.g., Single User (SU)-MIMO, MU (Multi User)-MIMO, massive MIMO, etc.), coordinated multipoint (CoMP) transmission, carrier aggregation transmission, transmission in unlicensed bands, device to device (D2D) communication (or proximity services (ProSe)), etc. Here, the plurality of UEs 30-1, 130-2, 130-3, 130-4, 130-5, and 130-6) may perform operations corresponding to the base stations 110-1, 110-2, 110-3, 120-1, and 120-2) and/or operations supported by the base stations 110-1, 110-2, 110-3, 120-1, and 120-2.

For example, the second base station 110-2 may transmit a signal to the fourth UE 130-4 through SU-MIMO or LoS MIMO, and the fourth UE 130-4 may receive the signal from the second base station 110-2 through SU-MIMO or LoS MIMO. Alternatively, the second base station 110-2 may transmit a signal to the fourth UE 130-4 and the fifth UE 130-5 through MU-MIMO, and the fourth UE 130-4 and the fifth UE 130-5 may receive the signal from the second base station 110-2 through MU-MIMO. Each of the first base station 110-1, the second base station 110-2, and the third base station 110-3 may transmit a signal to the fourth UE 130-4 through CoMP, and the fourth terminal 130-4 may receive signals from the first base station 110-1, the second base station 110-2, and the third base station 110-3 through CoMP. Each of the plurality of base stations 110-1, 110-2, 110-3, 120-1, and 120-2 may transmit/receive signals to/from UEs 130-1, 130-2, 130-3, 130-4, 130-5, and 130-6 belonging to the coverage thereof through CA.

The first base station 110-1, the second base station 110-2, and the third base station 110-3 may coordinate D2D communication between the fourth UE 130-4 and the fifth UE 130-5, and the fourth UE 130-4 and the fifth UE 130-5 may perform D2D communication according to coordination of the second base station 110-2 and the third base station 110-3.

Hereinafter, even when a method performed in a first communication node among communication nodes (e.g., transmission or reception of a signal) is described, a second communication node may perform a method (e.g., reception or transmission of a signal) corresponding to the method performed in the first communication node. That is, in a case where the operation of a UE is described, the base station corresponding thereto can perform the operation corresponding to the operation of the UE. On the other hand, in a case where the operation of a base station is described, the UE corresponding thereto can perform the operation corresponding to the operation of the base station.

Further, hereinafter, downlink (DL) refers to communication from a base station to a UE, and uplink (UL) refers to communication from a UE to a base station. On downlink, a transmitter may be a part of a base station and a receiver may be a part of a UE. On uplink, the transmitter may be a part of a UE and the receiver may be a part of a base station.

Recently, as smartphones and IoT (Internet of Things) terminals have rapidly spread, the amount of information exchanged through communication networks is increasing. Accordingly, it is necessary to consider an environment for providing faster services to more users than existing communication systems (or existing radio access technology) (e.g., enhanced mobile broadband communication) in the next-generation wireless access technology. To this end, design of a communication system considering machine type communication (MTC) for providing services by connecting multiple devices and objects is under discussion. In addition, design of a communication system (e.g., ultra-reliable and low latency communications (URLLC)) that takes into account services and/or terminals sensitive to communication reliability and/or latency is also under discussion.

Hereinafter, in this specification, for convenience of description, the next-generation wireless access technology may be referred to as New RAT (Radio Access Technology) or other names. For example, a wireless communication system to which New RAT is applied may be referred to as a NR (New Radio) system. In this specification, frequencies, frames, subframes, resources, resource blocks, regions, bands, subbands, control channels, data channels, synchronization signals, various reference signals, various signals, or various messages related to next-generation wireless access technology may be interpreted as various meanings used in the past, present, or in the future.

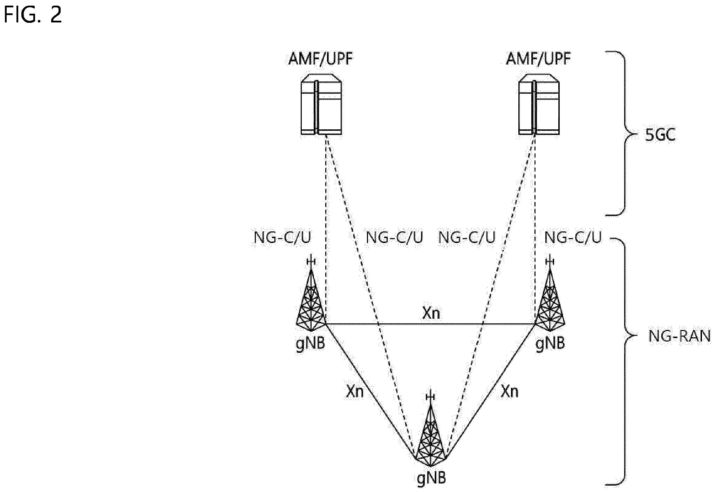

FIG. 2 is a diagram illustrating a 3GPP 5G system to which a data transmission method according to an embodiment of the present disclosure may be applied.

NR, next-generation wireless communication technology currently in the process of being standardized in 3GPP, is wireless access technology that provides an improved data transmission rate compared to LTE and can satisfy various QoS requirements required for each segmented and specific usage scenario. In particular, enhanced mobile broadband (eMBB), massive MTC (mMTC), and ultra reliable and low latency communications (URLLC) were defined as representative usage scenarios of 5G NR. As a method for satisfying requirements of each scenario, a frame structure flexible as compared to LTE is provided. The frame structure of NR supports a frame structure based on multiple subcarriers. A default subcarrier spacing (SCS) is 15 kHz, and a total of 5 types of SCS are supported as 15 kHz*2^n (n=0, 1, 2, 3, 4).

Referring to FIG. 2, next generation-radio access network (NG-RAN) includes gNBs that provide protocol termination of an NG-RAN user plane (SDAP/PDCP/RLC/MAC/PHY) and a control plane (RRC) protocol for UE. Here, NG-C represents a control plane interface used for an NG2 reference point between the NG-RAN and a 5th generation core (5GC). NG-U represents a user plane interface used for an NG3 reference point between the NG-RAN and the 5GC.

gNBs are interconnected through an Xn interface and connected to the 5GC through an NG interface. More specifically, the gNB is connected to an access and mobility management function (AMF) through the NG-C interface and connected to a user plane function (UPF) through the NG-U interface.

In the NR system of FIG. 2, multiple numerologies can be supported. Here, the numerology can be defined by a subcarrier spacing and cyclic prefix (CP) overhead. At this time, multiple subcarrier spacings can be derived by scaling the default subcarrier spacing to an integer. Additionally, although it is assumed that a very low subcarrier spacing is not used at a very high carrier frequency, the numerology used may be selected independently of the frequency band.

Additionally, in the NR system, various frame structures according to multiple numerologies can be supported.

### <NR waveform, numerology and frame structure>

In NR, a CP-OFDM waveform using a cyclic prefix is used for downlink transmission, and CP-OFDM or DFT-S-OFDM is used for uplink transmission. OFDM is easily combined with Multiple Input Multiple Output (MIMO) and has the advantages of high frequency efficiency and being able to use a low-complexity receiver.

Meanwhile, in NR, requirements for a data rate, a delay rate, coverage, and the like are different for each of the three scenarios described above, and thus it is necessary to efficiently satisfy the requirements for each scenario through the frequency band that constitutes an arbitrary NR system. To this end, a technology for efficiently multiplexing radio resources based on a plurality of different numerologies has been proposed.

Specifically, an NR transmission numerology is determined based on a subcarrier spacing and a cyclic prefix (CP), and as shown in Table 1 below, value µ is used as an exponent value of 2 based on 15 kHz, resulting in exponential change.

**[Table 1]**

| µ | Subcarrier spacing (kHz) | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

As shown in Table 1 above, NR numerology can be divided into five types depending on the subcarrier spacing. This is different from the subcarrier spacing of LTE, one of the 4G communication technologies, which is fixed to 15 kHz. Specifically, subcarrier spacings used for data transmission in NR are 15, 30, 60, and 120 kHz, and subcarrier spacings used for synchronization signal transmission are 15, 30, 120, and 240 kHz. Additionally, an extended CP is applied only to the 60 kHz subcarrier spacing. Meanwhile, the frame structure in NR is defined as a frame with a length of 10 ms consisting of 10 subframes with the same length of 1 ms. One frame can be divided into half-frames of 5 ms, and each half-frame includes 5 subframes. In the case of 15 kHz subcarrier spacing, one subframe consists of 1 slot, and each slot consists of 14 OFDM symbols.

### <NR physical resources>

Regarding physical resources in NR, an antenna port, a resource grid, a resource element, a resource block, a bandwidth part, etc. are considered.

An antenna port is defined such that a channel carrying a symbol on the antenna port can be inferred from a channel carrying another symbol on the same antenna port. If large-scale properties of a channel carrying a symbol on one antenna port can be inferred from a channel carrying a symbol on another antenna port, it can be said that the two antenna ports are in a quasi-co-location (QC/QCL) relationship. Here, the large-scale properties include one or more of delay spread, Doppler spread, Doppler shift, average delay, and spatial Rx parameter.

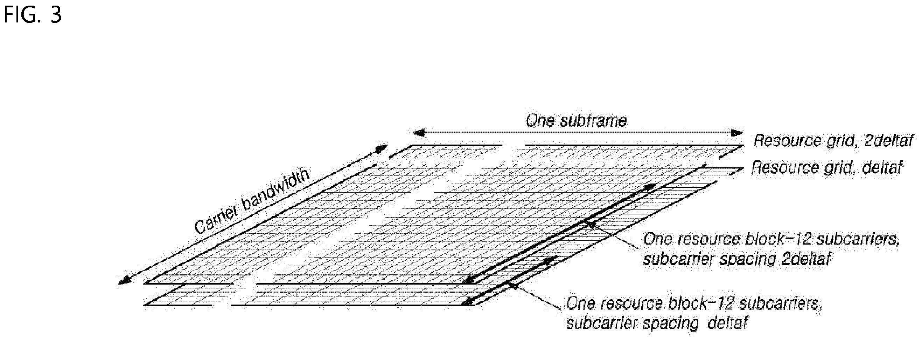

FIG. 3 is a diagram illustrating a resource grid supported by wireless access technology to which the present embodiment is applicable.

Referring to FIG. 3, since NR supports multiple numerology on the same carrier, a resource grid may be present for each numerology. Additionally, a resource grid may be present depending on an antenna port, a subcarrier spacing, and a transmission direction.

A resource block consists of 12 subcarriers and is defined only in the frequency domain. Additionally, a resource element consists of one OFDM symbol and one subcarrier. Therefore, as shown in FIG. 3, the size of one resource block may vary depending on the subcarrier spacing. Additionally, in NR, "Point A", which serves as a common reference point for a resource block grid, a common resource block, a physical resource block, and the like are defined.

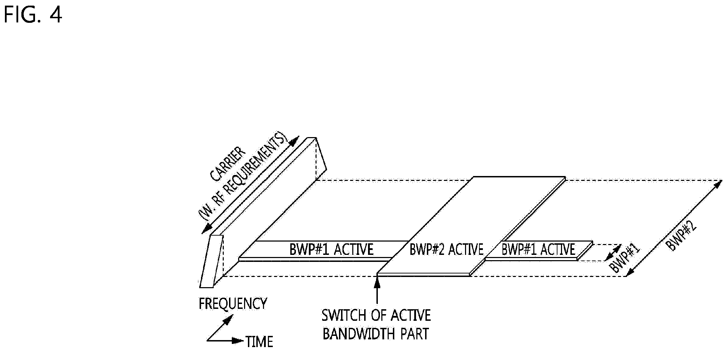

FIG. 4 is a diagram illustrating bandwidth parts supported by the wireless access technology to which the present embodiment is applicable.

In 5G NR, unlike LTE E-UTRA in which a carrier bandwidth is fixed to 20 MHz, the maximum carrier bandwidth is set in a range of 50 MHz to 400 MHz for each subcarrier spacing. Therefore, it is not assumed that all UEs use all of these carrier bandwidths. Accordingly, in NR, a UE can designate and use a bandwidth part (BWP) within the carrier bandwidth as shown in FIG. 4. Additionally, the bandwidth part is linked to one numerology, includes a subset of consecutive common resource blocks, and can be activated dynamically over time. Up to four bandwidth parts are configured for each UE on each of uplink and downlink, and data is transmitted and received using a bandwidth part activated at a given time.

In the case of a paired spectrum, uplink and downlink bandwidth parts are set independently, and in the case of an unpaired spectrum, downlink and uplink bandwidth parts are set in pairs such that they can share a center frequency in order to prevent unnecessary frequency re-tuning between downlink and uplink operations.

### <NR initial access>

In NR, a UE performs cell search and random access procedures to connect to a base station and perform communication.

Cell search is a procedure in which a UE synchronizes to the cell of the corresponding base station using a synchronization signal block (SSB) transmitted by the base station, obtains a physical layer cell ID, and obtains system information.

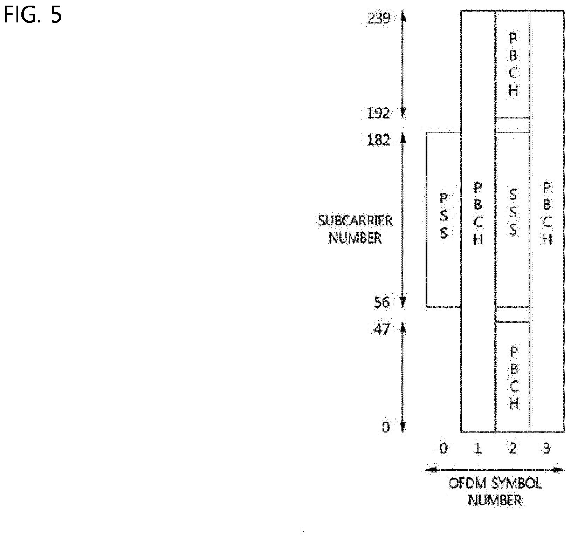

FIG. 5 is a diagram illustrating a synchronization signal block in the wireless access technology to which the present embodiment is applicable.

Referring to FIG. 5, the SSB includes a primary synchronization signal (PSS) and a secondary synchronization signal (SSS) each occupying 1 symbol and 127 subcarriers, and a PBCH spanning 3 OFDM symbols and 240 subcarriers.

A UE monitors the SSB in the time and frequency domains and receives the SSB.

The SSB can be transmitted up to 64 times in 5 ms. Multiple SSBs are transmitted through different transmission beams within 5 ms, and the UE performs detection on the assumption that SSBs are transmitted every 20 ms interval based on one specific beam used for transmission. The number of beams that can be used for SSB transmission within 5 ms can increase as the frequency band becomes higher. For example, up to 4 SSB beams can be transmitted at 3 GHz or lower, up to 8 SSB beams can be transmitted in frequency bands from 3 to 6 GHz, and up to 64 different beams can be used to SSB transmission in frequency bands above 6 GHz.

Two SSBs are included in one slot, and the start symbol and number of repetitions within the slot are determined depending on the subcarrier spacing, as below.

Meanwhile, unlike SS in conventional LTE, SSB is not transmitted at the center frequency of the carrier bandwidth. That is, SSBs can also be transmitted in parts other than the center of the system band, and when broadband operation is supported, multiple SSBs can be transmitted in the frequency domain. Accordingly, a UE monitors the SSBs using a synchronization raster, which is a candidate frequency position for monitoring SSBs. A carrier raster, which is center frequency position information of a channel for initial access, and the synchronization raster have been newly defined in NR, and the synchronization raster has a wider frequency interval than the carrier raster and thus can support rapid SSB search of a UE.

A UE can obtain an MIB through the PBCH of the SSB. The master information block (MIB) includes minimal information for the UE to receive the remaining minimum system information (RMSI) broadcast by a network. In addition, the PBCH may include information on the position of the first DM-RS symbol in the time domain, information for the UE to monitor SIB1 (e.g., SIB1 numerology information, information regarding SIB1 CORESET, search space information, PDCCH related parameter information, and the like), offset information between a common resource block and the SSB (the position of the absolute SSB within the carrier is transmitted through SIB1), and the like. Here, the SIB1 numerology information is equally applied to some messages used in the random access procedure for accessing the base station after the UE completes the cell search procedure. For example, the SIB1 numerology information can be applied to at least one of messages 1 to 4 for the random access procedure.

The above-described RMSI may mean system information block 1 (SIB1), and SIB1 is broadcast periodically (e.g., 160 ms) in the cell. SIB1 includes information necessary for a UE to perform the initial random access procedure and is transmitted periodically through a PDSCH. In order for the UE to receive SIB1, the UE needs to receive numerology information used for SIB1 transmission and control resource set (CORESET) information used for SIB1 scheduling through a PBCH. The UE checks scheduling information for SIB1 using SI-RNTI in the CORESET and acquires SIB1 on the PDSCH according to the scheduling information. Except for SIB1, the remaining SIBs may be transmitted periodically or transmitted according to a request of the UE.

### <Sidelink>

New radio (NR), a radio access technology (RAT) of the 5G mobile communication system, supports sidelink (SL) for D2D.

Sidelink is an inter-UE (or inter-user equipment (UE)) interface for sidelink communication and sidelink discovery. The sidelink corresponds to the PC5 interface. Sidelink communication is a function enabling two or more adjacent UEs to perform proximity-based services (ProSe) direct communication using E-UTRA (or NR in 5G) technology without using any network nodes, and sidelink discovery is a function enabling two or more adjacent UEs to make a ProSe direct discovery using E-UTRA (or NR in 5G) technology without using any network nodes. Hereinafter, in sidelink communication, a UE transmitting a signal is referred to as a transmitting UE (Tx UE), and a UE receiving a signal is referred to as a receiving UE (Rx UE).

Sidelink physical channels are formed between sidelink UEs and include a physical sidelink broadcast channel (PSBCH), a physical sidelink discovery channel (PSDCH), a physical sidelink control channel (PSCCH), a physical sidelink shared channel (PSSCH), and a physical sidelink feedback channel (PSFCH). The PSBCH transfers system and synchronization-related information, the PSDCH transfers a sidelink discovery message, the PSCCH transfers control information for sidelink communication, the PSSCH transfers data for sidelink communication, and the PSFCH transfers H-ARQ feedback from the receiving UE to the transmitting UE. Sidelink physical channels are mapped to sidelink transport channels. The PSBCH is mapped to a sidelink broadcast channel (SL-BCH). The PSDCH is mapped to a sidelink discovery channel (SL-DCH). The PSSCH is mapped to a sidelink shared channel (SL-SCH).

In sidelink, logical channels are classified into control channels for transferring information of a control plane and traffic channels for transferring information of a user plane. A sidelink control channel includes a sidelink broadcast control channel (SBCCH), which is a sidelink channel for broadcasting sidelink system information from one UE to another UE. The SBCCH is mapped to the SL-BCH. A sidelink traffic channel includes a sidelink traffic channel (STCH), a point-to-multipoint channel for transmitting user information from one UE to another UE. The STCH is mapped to the SL-SCH. This channel may only be used by UEs capable of sidelink communication.

A UE supporting sidelink communication may operate in the following two modes for resource allocation. A first mode is a scheduled resource allocation mode. Scheduled resource allocation may be referred to as mode 1. In mode 1, the UE needs to be in RRC_CONNECTED to transmit data. The UE requests transmission resources from a base station (BS). The BS schedules transmission resources for transmission of sidelink control information (SCI) and data. The UE transmits a scheduling request (dedicated scheduling request (D-SR) or random access) to the BS and then sends a sidelink buffer status report (BSR). Based on the sidelink BSR, the BS may determine that the UE has data for sidelink communication transmission and estimate resources required for transmission. The BS may schedule transmission resources for sidelink communication using a configured sidelink radio network temporary identity (SL-RNTI).

A second mode is UE autonomous resource selection. The UE autonomous resource selection mode may be referred to as mode 2. In mode 2, the UE autonomously selects resources from a resource pool and selects a transmission format for transmitting sidelink control information and data. There may be up to eight resource pools which are previously configured for an out-of-coverage operation or provided by RRC signaling for an in-coverage operation. One or more ProSe per-packet priorities (PPPP) may be connected to each resource pool. For transmission of a MAC protocol data unit (PDU), the UE selects a resource pool having one of the PPPPs which are the same as the PPPPs of a logical channel having the highest PPPP among the logical channels identified in the MAC PDU. The sidelink control pool and sidelink data pool are related in a one-to-one manner. Once a resource pool is selected, the selection is valid for the entire sidelink control period. After the sidelink control period ends, the UE may select a resource pool again.

Meanwhile, there are two types of resource allocation in a discovery message notification. The first is UE autonomous resource selection, which is a resource allocation procedure in which resources for notifying about discovery messages are allocated on a non-UE specific basis. UE autonomous resource selection may be referred to as type 1. In type 1, the BS provides the UE with a resource pool configuration used in notification of discovery messages. The configuration may be signaled by broadcast or dedicated signaling. The UE autonomously selects a radio resource from an indicated resource pool and notifies about a discovery message. The UE may notify about the discovery message on a randomly selected discovery resource during each discovery period.

The second is scheduled resource allocation, which is a resource allocation procedure in which resources for notifying about discovery messages are allocated on a UE-specific basis. The scheduled resource allocation may be referred to as type 2. In type 2, the RRC _CONNECTED UE may request resources to notify the BS about a discovery message through RRC. The BS allocates resources through RRC. Resources are allocated within a resource pool configured within the UE for notification.

Hereinafter, sidelink communication through ProSe UE-network relay is described. ProSe UE-network relay provides a general L3 forwarding function that may relay all types of IP traffic between a remote UE and a network. One-to-one and one-to-many sidelink communications are used between the remote UE and a relay UE. For both the remote UE and the relay UE, only one single carrier (i.e., public safety ProSe carrier) operation is supported (i.e., Uu and PC5 should be the same carrier for the relay/remote UE). The remote UE has been authenticated from a higher layer and may be in coverage of the public safety ProSe carrier or may be outside the coverage of all supported carriers including the public safety ProSe carrier, for UE-to-network relay discovery, (re)selection and communication. The relay UE is always within E-UTRAN (or NG-RAN for 5G) range. The relay UE and remote UE perform sidelink communication and sidelink discovery.

The BS controls whether the UE may act as a ProSe UE-network relay. ProSe UE-network relay operations are supported in a cell when the BS broadcasts information related to ProSe UE-network relay operations. The BS may provide transmission resources for ProSe UE-network relay discovery using broadcast signaling for RRC_IDLE and dedicated signaling for RRC_CONNECTED and reception resources for ProSe UE-network relay discovery using broadcast signaling. In addition, the BS may broadcast the minimum and/or maximum Uu link quality (i.e., reference signal received power (RSRP)) thresholds that need to be satisfied before the UE initiates the ProSe UE-network relay discovery procedure. In RRC_IDLE, when the BS broadcasts the transmission resource pool, the UE uses the threshold to autonomously start or stop the ProSe UE-network relay discovery procedure. In RRC_CONNECTED, the UE uses a threshold to determine whether it may indicate to the eNB that the UE is a relay UE and wants to initiate ProSe UE-network relay discovery. If the BS does not broadcast a transmission resource pool for ProSe UE-network relay discovery, the UE may initiate a request for ProSe UE-network relay discovery resources by dedicated signaling, while considering a broadcast threshold. When ProSe UE-network relay is started by broadcast signaling, the relay UE may perform ProSe UE-network relay discovery in RRC_IDLE. If the ProSe UE-network relay is initiated by dedicated signaling, the relay UE may perform ProSe UE-network relay discovery as long as the UE is in RRC_CONNECTED.

For the ProSe UE-network relay operation, the relay UE performing sidelink communication should be in RRC_CONNECTED. After receiving a layer 2 link establishment request or a temporary mobile group identity (TMGI) monitoring request (higher layer message) from a remote UE, the relay UE informs the BS that the relay UE is a relay UE and wants to perform ProSe UE-network relay sidelink communication. The BS may provide resources for the ProSe UE-network relay communication.

The remote UE may determine when to start monitoring for ProSe UE-network relay discovery. The remote UE may transmit a ProSe UE-network relay discovery prompt message while in the RRC_IDLE or RRC_CONNECTED state depending on the configuration of resources for ProSe UE-network relay discovery. The BS may broadcast a threshold used by the remote UE to determine whether the remote UE may transmit a ProSe UE-network relay discovery prompt message to connect to or communicate with the relay UE. The remote UE in the RRC_CONNECTED state uses the broadcast threshold to determine whether the remote UE may indicate that the remote UE is a remote UE and wants to participate in ProSe UE-network relay discovery and/or communication. For ProSe UE-network relay operations, the BS may provide transmission resources using broadcast or dedicated signaling or may provide reception resources using broadcast signaling. If the RSRP exceeds the broadcast threshold, the remote UE stops the ProSe UE-network relay discovery search and the use of communication resources. An exact time to switch traffic from Uu to PC5 (sidelink) and vice versa depends on a higher layer.

The remote UE performs wireless measurement on the PC5 interface and uses the wireless measurement, along with higher layer criteria, for relay UE selection and reselection. If the PC5 link quality exceeds the configured threshold (pre-configured or provided by the eNB), the relay UE is considered to be compliant with respect to the radio criteria. The remote UE selects a relay UE that satisfies the higher layer criteria and has the best PC5 link quality among all suitable relay UEs.

The remote UE triggers relay UE reselection when the PC5 signal strength of the current relay UE is lower than the configured signal strength threshold or when a layer 2 link release message (higher layer message) is received from the relay UE.

### <6G system>

A next-generation communication system after 5G or 5G-Advanced will be described. Hereinafter, for convenience, the next-generation communication system will be referred to as a 6G system.

The 6G (wireless communications) system is for the purpose of (i) a very high data rate per device, (ii) a very large number of connected devices, (iii) global connectivity, (iv) very low latency, (v) reduction of energy consumption of battery-free IoT devices, (vi) ultra-reliable connectivity, (vii) connected intelligence with machine learning capabilities, and the like. The vision of the 6G system may have four aspects such as intelligent connectivity, deep connectivity, holographic connectivity, and ubiquitous connectivity. Although the requirements or key performance indicators (KPIs) for the 6G system have not yet been determined, it is expected that the 6G system will have the requirements as shown in Table 2. That is, Table 2 shows an example of the requirements of the 6G system.

**[Table 2]**

| | |
|---|---|
| Peak data rate | 1 Tbps |
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine-type communications (mMTC), AI integrated communication, tactile Internet, high throughput, high network capacity, high energy efficiency, low backhaul and access network congestion, and enhanced data security.

Hereinafter, artificial intelligence (AI) will be described.

The most important and newly introduced technology in the 6G system is AI. AI was not involved in the 4G system. The 5G system will support partial or very limited AI. However, the 6G system will support AI for full automation. Advances in machine learning will create more intelligent networks for real-time communication in 6G. Introducing AI in communication can simplify and improve real-time data transmission. AI can use numerous analytics to determine a method of performing complex target operations. That is, AI can increase efficiency and reduce processing delays.

Time-consuming operations such as handover, network selection, and resource scheduling can be performed instantly by using AI. AI can also play an important role in M2M, machine-to-human and human-to-machine communications. Additionally, AI can enable rapid communication in a brain computer interface (BCI). AI-based communication systems can be supported by metamaterials, intelligent structures, intelligent networks, intelligent devices, intelligent cognitive radio, self-sustaining wireless networks, and machine learning.

Recently, attempts have been made to integrate AI with wireless communication systems and have been focused on an application layer and a network layer, and particularly, deep learning has been focused on the field of wireless resource management and allocation. However, such research is gradually advancing to the MAC layer and physical layer, and attempts are being made to combine deep learning with wireless transmission, especially in the physical layer. AI-based physical layer transmission means applying signal processing and communication mechanisms based on AI drivers, rather than traditional communication frameworks, in fundamental signal processing and communication mechanisms. For example, this may include deep learning-based channel coding and decoding, deep learning-based signal estimation and detection, deep learning-based MIMO mechanism, AI-based resource scheduling and allocation, etc.

Machine learning can be used for channel estimation and channel tracking, and can be used for power allocation, interference cancellation, and the like in the physical layer of downlink (DL). Machine learning can also be used for antenna selection, power control, and symbol detection in MIMO systems.

However, application of a DNN for transmission in the physical layer may have the following problems.

Deep learning-based AI algorithms require a large amount of training data in order to optimize training parameters. However, due to limitations in acquiring data in a specific channel environment as training data, a lot of training data is used offline. This means that static training on training data in a specific channel environment may result in a contradiction between dynamic characteristics and diversity of a radio channel.

Additionally, current deep learning mainly targets real signals. However, signals of the physical layer of wireless communication are complex signals. More research on neural networks that detect complex domain signals to match characteristics of radio communication signals is required.

Hereinafter, machine learning will be described in more detail.

Machine learning refers to a series of operations for training machines to create machines that can perform tasks that are difficult or difficult for humans to perform. Machine learning requires data and a learning model. In machine learning, data learning methods can be broadly divided into three types: supervised learning, unsupervised learning, and reinforcement learning.

Neural network learning is intended to minimize errors in output. Neural network learning is a process of repeatedly inputting training data into a neural network, calculating the output of the neural network and errors in a target with respect to the training data, and backpropagating errors of the neural network in a direction from the output layer of the neural network to the input layer to reduce the errors, thereby updating the weight of each node in the neural network.

Supervised learning uses training data in which correct answers are labeled, whereas unsupervised learning may use training data in which correct answers are not labeled. That is, in the case of supervised learning with respect to data classification, for example, training data may be data in which each piece of training data is labeled with a category. Labeled training data is input to a neural network, and error can be calculated by comparing the output (category) of the neural network with the label of the training data. The calculated error is backpropagated in the reverse direction (i.e., a direction from the output layer to the input layer) in the neural network, and a connection weight of each node in each layer of the neural network can be updated according to backpropagation. The amount of change in the updated connection weight of each node may be determined according to a learning rate. Calculation of the neural network on input data and backpropagation of error can constitute a learning cycle (epoch). The learning rate may be applied differently depending on the number of repetitions of the learning cycle of the neural network. For example, in the early stages of neural network training, a high learning rate can be used to ensure that the neural network rapidly achieves a certain level of performance to increase efficiency, and in the later stages of training, a low learning rate can be used to increase accuracy.

Training methods may vary depending on characteristics of data. For example, when the goal is to accurately predict data transmitted from a transmitter at a receiver in a communication system, it is preferable to perform training using supervised learning rather than unsupervised learning or reinforcement learning.

A learning model corresponds to the human brain, and the most basic linear model can be considered. However, deep learning is a machine learning paradigm that uses a highly complex neural network structure such as artificial neural networks as a learning model.

Neural network cores used as learning methods are broadly divided into a deep neural network (DNN), a convolutional deep neural network (CNN), and a recurrent neural network (RNN).

An artificial neural network is an example of connecting multiple perceptrons.

Hereinafter, Tera-Hertz (THz) communication will be described.

A data transmission rate can be increased by increasing a channel bandwidth. In order to easily secure a wide channel bandwidth, a high frequency band needs to be used, and thus a communication method using a sub-THz band, which is a frequency band higher than 100 GHz, and a THz band higher than the sub-THz band is considered. Since an antenna size and an antenna spacing are small in communication methods using high frequency bands, advanced large-scale MIMO can be applied thereto. THz waves also known as submillimeter radiation typically represent a frequency band between 0.1 THz and 10 THz with a wavelength in the range 0.03 mm to 3 mm. The range of 100 GHz to 300 GHz (sub-THz band) is regarded as a main part of a THz band for cellular communication. Frequency bands up to 100 GHz were considered in 5G mobile communication, and the sub-THz band and THz band are expected to be used in 6G mobile communication.

6G mobile communication uses sub-THz and THz bands in addition to the existing mmWave band. If the Sub-THz band is added to the mmWave band, much more frequency resources are used, making it easier to increase a channel bandwidth, resulting in an increased data transmission rate and cell throughput. Among defined THz bands, 300 GHz to 3 THz belong to the far infrared (IR) frequency band. The band of 300 GHz to 3 THz is a part of an optic band, but is at the border of the optic band and immediately behind the RF band. Therefore, the band of 300 GHz to 3 THz shows similarity to RF.

Key characteristics of THz communication include (i) a considerably wide channel bandwidth that can be widely used to support very high data rates, and (ii) high path loss occurring at a high frequency (highly directional antennas are indispensable). The antenna size and antenna spacing are small due to a short wavelength, and thus a significant number of antennas can be disposed in a small area. A narrow beam generated by applying beamforming to such many antennas can reduce interference. That is, the short wavelength of THz signals allows a much larger number of antenna elements to be integrated into a device and a BS operating in this band. This enables the use of advanced adaptive array techniques that can overcome range limitations.

THz wireless communication uses wireless communication using THz waves with a frequency of approximately 0.1 to 10 THz (1 THz = 1000 GHz) and refers to terahertz (THz) band wireless communication using a very high carrier frequency of 100 GHz or more. THz waves are located between radio frequency (RF)/millimeter (mm) and infrared bands, (i) penetrate non-metal/non-polarized materials well as compared to visible light/infrared ray, have a shorter wavelength than RF/millimeter waves and thus have high straightness, and can focus a beam. In addition, the photon energy of THz waves is merely a few meV and thus the THz waves are harmless to the human body. The frequency band expected to be used for THz wireless communication may be D-band (110 GHz to 170 GHz) or H-band (220 GHz to 325 GHz) bands which have small propagation loss due to absorption of molecules in the air. In addition to 3GPP, standardization for THz wireless communication is under discussion with the IEEE 802.15 THz working group as a center, and standard documents issued by the IEEE 802.15 Task Group (TG3d, TG3e) can specify or supplement the content described in this specification. THz wireless communication can be applied to wireless cognition, sensing, imaging, wireless communication, THz navigation, etc.

THz wireless communication scenarios can be classified into a macro network, a micro network, and a nanoscale network. In the macro network, THz wireless communication can be applied to vehicle-to-vehicle (V2V) communication and backhaul/fronthaul connection. In the micro network, THz wireless communication can be applied to indoor small cells, fixed point-to-point or multi-point connection such as wireless connections in data centers, and nearfield communication such as kiosk downloading.

### <Line-of-Sight (LoS) MIMO system>

The MIMO system uses multiple transmit antennas and multiple receive antennas to support spatial multiplexing (SM). When a channel matrix between a transmitter and a receiver is H, the elements of H are composed of channel gain values between the transmitter and the receiver. The number of spatially separable layers between the transmitter and receiver is equal to the rank of the channel matrix H, and a transmitter supporting SM can transmit different data to a receiver through multiple layers. In theory, the maximum data rate or throughput of the MIMO system can increase in proportional to the number of ranks. When the number of ranks provided by His rank(H), the maximum value of rank(H) is min(N_{T}, N_{R}). Here, N_{T} is the number of transmit antennas, N_{R} is the number of receive antennas, and min(A, B) means the minimum value between A and B.

A state in which a signal transmitted from a transmit antenna can be delivered to a receive antenna in a straight line without any obstacle is called a LoS (Line of Sight) environment. In general, since signals transmitted from multiple transmit antennas reach a receive antenna through various paths reflected by obstacles, the rank of the channel matrix H may be greater than 1 and there may be multiple spatially separable layers. However, in the LoS environment (particularly in a case where a transmit antenna and a receive antenna are relatively close), SM cannot be applied because the rank of the channel matrix is almost 1 even if there are multiple transmit and receive antennas. This is because the correlation between channel gain values, which are elements of the channel matrix H, increases.

To apply SM in this LoS environment, the physical structure of the antenna needs to be improved or multiple layers transmitted from a transmitter to a receiver need to be created using various characteristics such as signal polarization. As an example, a method of using a vertical-horizontal (V-H) polarization or X-polarization (or cross polarization) antenna can double the transmission rate as in SM even in the LoS environment by configuring two physically separable layers. In addition, two or more layers can be created in the LoS environment by applying two or more different types of LoS MIMO at the same time.

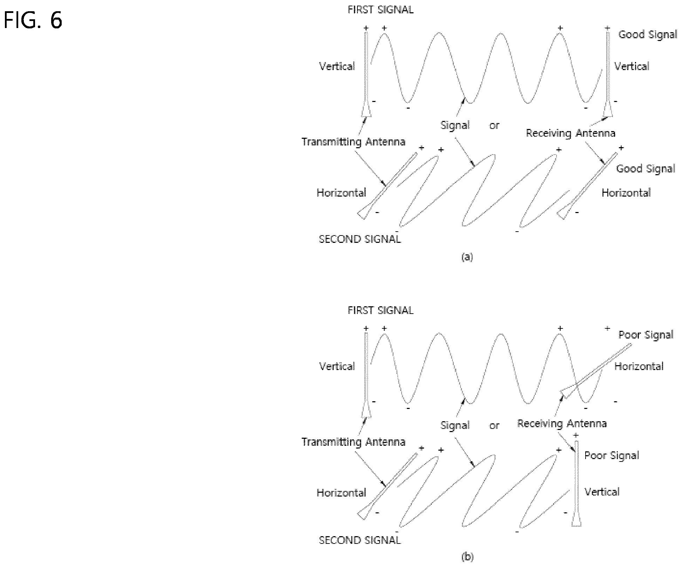

FIG. 6 is a diagram illustrating the principle of a V-H polarization antenna.

Referring to FIG. 6, a V-H polarization antenna includes a vertical antenna and a horizontal antenna that are angled 90 degrees from each other so that signals of each antenna may be physically distinguished. Alternatively, a cross polarization (or X-polarization) antenna may use two cross antennas forming +45 degrees and -45 degrees. A first signal transmitted from a vertical antenna of a transmitter may be received by the vertical antenna of a receiver as shown in (a), but is not properly received by the horizontal antenna of the receiver as shown in (b). Conversely, a second signal transmitted from a horizontal antenna of a transmitter may be properly received by the horizontal antenna of the receiver as shown in (a), but is not easily received by the vertical antenna of the receiver as shown in (b).

This is because a channel may be divided into two (i.e., two layers are formed) between the transmit antenna and the receive antenna based on the V-H polarization antenna. In this case, because different signals (or data) may be transmitted through each channel, the effect as if a rank is 2 and two layers are formed. Hereinafter, in this specification, a MIMO system that may support ranks of 2 or more in an LoS environment or during LoS communication is simply referred to as an LoS MIMO system. An LoS environment may be used interchangeably with various terms, such as LoS conditions, LoS communication environment, and LoS status.

In this specification, the LoS MIMO system may be equipped with a V-H polarization or X polarization (cross-pol.) antenna to support multiple ranks even in a LoS environment. However, the LoS MIMO system may include any physical antenna structure capable of providing multiple ranks in a LoS environment, and may not be limitedly interpreted as essentially including a V-H polarization or X polarization antenna. For example, the LoS MIMO system may use any one of a linear polarization antenna (vertical-horizontal, cross polarization (X-pole, ±45 degrees)), a left-circular polarization antenna (left-circular, right-circular), and an elliptical polarization antenna (elliptical polarization).

When using the existing MIMO and SM in the LoS environment, the rank is 1 and SM cannot be applied, but when using the LoS MIMO system, the rank may be 2 or more, which may increase a data transfer rate.

In addition, if the number of antennas is large, LoS MIMO and beamforming may be combined. For example, if V-H polarization LoS MIMO and beamforming are combined, a beam may be formed with multiple antennas in a vertical direction and a beam may be formed with multiple antennas in a horizontal direction to create two layers with two beams.

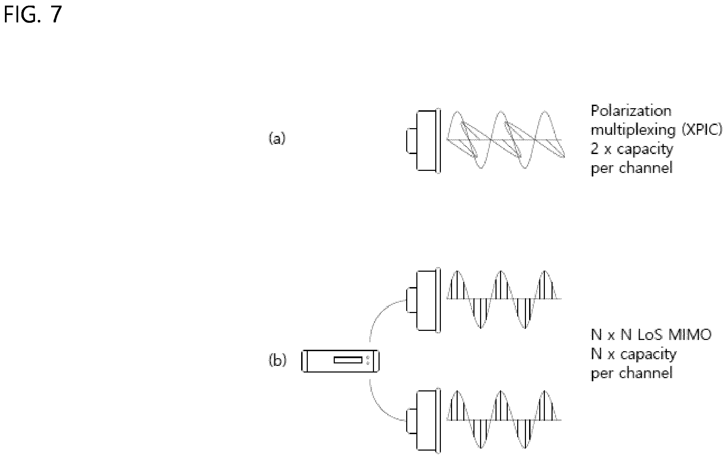

FIG. 7 shows a LoS MIMO system used for microwave transmission according to an example.

Referring to FIG. 7, (a) shows polarization multiplexing supporting twice the capacity (2x), and (b) shows an N× LoS MIMO system supporting N times the capacity (Nx). Unlike microwave transmission systems, mobile communication systems have wide antenna beams. Therefore, in mobile communication systems, N× LoS MIMO in (b) may be considered in special cases. Meanwhile, polarization multiplexing in (a) may be used in a high-frequency LoS environment, so it may also be considered in mobile communication systems.

The LoS MIMO system may be applied to all frequency bands used in general mobile communications. In particular, the LoS MIMO system is very important in high frequency bands (e.g., 10 GHz to 100 GHz, or hundreds of GHz or tera-Hz). This is because the coverage is small in these high frequency bands, so there is a high possibility that an LoS environment will be formed between the transmitting and reception antennas. In other words, in the high-frequency band, a transmission distance is relatively close, and there is a high possibility that more communication will occur in the LoS environment visible directly, rather than reflected waves.

In addition, when signals are transmitted and received in the air, such as in a nonterrestrial network (NTN) environment using unmanned aerial vehicles or satellites, the LoS environment may occur frequently.

Scenarios in which the LoS MIMO system is applied to high-frequency band sidelink communication are as follows.
i) A LoS environment in which the transmitting UE and the receiving UE are relatively close: In this case, LoS MIMO performance may differ depending on the frequency and channel environment.
ii) Direct communication between servers in a data center, direct communication between vehicles, V2V in a platooning situation of vehicles, communication between drones in the air, communication between personal aerial vehicles (PAVs) or uncrewed aerial vehicles (UAVs) in the air. etc.
iii) LoS environment between public BSs and UEs

The 5G mobile communication system is considering up to 100 GHz, and the 6G mobile communication system is expected to basically add a 100 to 300 GHz band, and a THz band may also be considered. In the 100 to 300 GHz band or higher frequencies considered in the 6G mobile communication system, a distance between a transmitter and a receiver needs to be very short, and transfer rates of tens to hundreds of Gbps are required. To support the transfer rates, next-generation mobile communication systems basically use multiple antennas not only in the transmitter but also in the receiver. As the next-generation mobile communication system uses higher frequency bands, the frequency of communication in a LoS environment may increase. In this case, there is a high possibility that the rank may converge to 1 and existing SM will not be supported.

Therefore, the next-generation mobile communication system will likely adopt the LoS MIMO system but use a method different from the protocol that supports existing SM. Therefore, a new protocol is required to introduce the LoS MIMO system into 5G and 6G of 3GPP and subsequent generations of standard technology.

In this specification, a sidelink UE according to the LoS MIMO system may operate in an LoS MIMO mode that supports SM in an LoS environment and the existing MIMO mode that cannot support SM in the LoS environment. In this case, a procedure for setting or activating the LoS MIMO mode is required, and an embodiment thereof is disclosed below.

### 1. System information transfer procedure

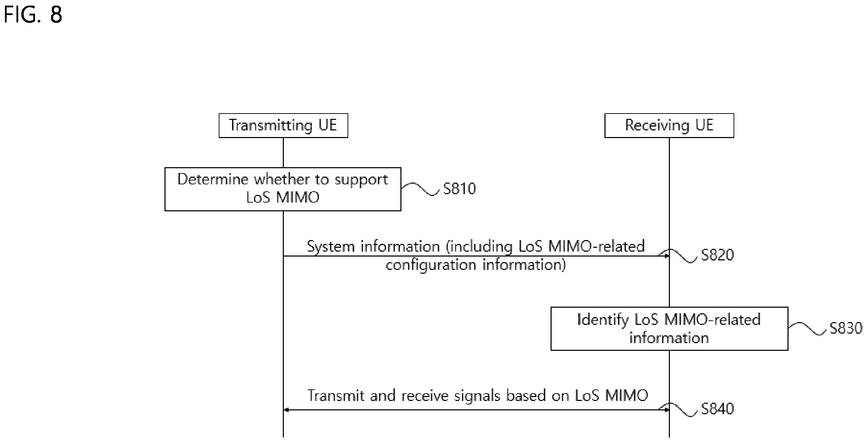

FIG. 8 is a flowchart illustrating a LoS MIMO setting procedure for a sidelink according to an example. FIG. 8 shows an embodiment in which a transmitting UE transmits system information to a receiving UE.

Referring to FIG. 8, the transmitting UE may determine whether to support an LoS MIMO mode (S800). Step S800 may be omitted in some cases. The transmitting UE transmits system information including LoS MIMO-related configuration information to the receiving UE (S810).

As an example, system information including the LoS MIMO-related configuration information may be a system information block (SIB).

As another example, system information including the LoS MIMO-related configuration information may be a master information block (MIB).

If the transmitting UE determines not to support LoS MIMO operation in step S800, the system information may not include LoS MIMO-related configuration information.

In step S810, the LoS MIMO-related configuration information included in the system information may be basic configuration information for LoS MIMO, and detailed configuration information for LoS MIMO may be included in an RRC message transmitted from the BS. For example, if the LoS MIMO-related configuration information includes A and B, A, as basic configuration information for LoS MIMO, may be included in the system information of the transmitting UE to be transmitted to the receiving UE, and B, as detailed configuration information for LoS MIMO, may be RRC-connected, included in RRC signaling of the BS, and then transmitted to the receiving UE.

If the transmitting UE supports multiple frequency bands, the transmitting UE may vary whether to support LoS MIMO and a support method for each frequency band. In this case, the transmitting UE may include related information in system information and transmit the same. For example, it is assumed that the transmitting UE supports the first frequency band and the second frequency band. The transmitting UE may identify in the system information that LoS MIMO is supported for the first frequency band and that LoS MIMO is not supported for the second frequency band. Alternatively, the transmitting UE may identify in the system information that LoS MIMO is supported and the LoS MIMO support method for the first frequency band and identify that LoS MIMO is not supported for the second frequency band.

After receiving system information, the receiving UE identifies LoS MIMO-related configuration information (S820). If the LoS MIMO-related configuration information indicates LoS MIMO support, the receiving UE transmits and receives a sidelink signal to and from the transmitting UE based on LoS MIMO (S830). For example, step S830 includes an operation of the transmitting UE generating a sidelink signal for each layer defined by LoS MIMO and transmitting a sidelink signal to the receiving UE through a corresponding layer. The receiving UE sets the reception antenna thereof to LoS MIMO mode, receives a sidelink signal for each layer, and decodes the received sidelink signals.

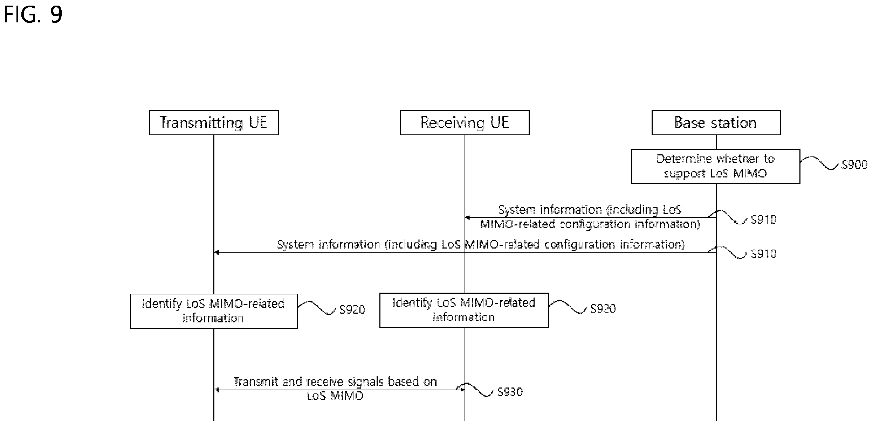

FIG. 9 is a flowchart illustrating a LoS MIMO setting procedure for a sidelink according to another example. FIG. 9 shows an embodiment in which the BS transmits system information to each UE.

Referring to FIG. 9, the BS may determine whether to support LoS MIMO mode (S900). Step S900 may be omitted in some cases. The BS transmits system information including LoS MIMO-related configuration information to the transmitting UE and the receiving UE (S910).

As an example, the system information including the LoS MIMO-related configuration information may be a system information block (SIB).

As another example, the system information including the LoS MIMO-related configuration information may be a master information block (MIB).

If the BS determines not to support LoS MIMO operation in step S900, the system information may not include LoS MIMO related configuration information.

In step S910, the LoS MIMO-related configuration information included in the system information may be basic configuration information for LoS MIMO, and detailed configuration information for LoS MIMO may be included in an RRC message transmitted by the BS. For example, if the LoS MIMO-related configuration information includes A and B, A, as basic configuration information for LoS MIMO, may be included in the system information and transmitted to each UE, and B, as detailed configuration information for LoS MIMO, may be included in RRC signaling of the BS after RRC connection and transmitted to each UE.

If sidelink (SL) between UEs supports multiple frequency bands, the BS may vary whether to support LoS MIMO for each frequency band and the support method. In this case, the BS may include related information in system information and transmit the same. For example, it is assumed that the UE support the first frequency band and the second frequency band. The BS may identify in the system information that LoS MIMO is supported for the first frequency band and that LoS MIMO is not supported for the second frequency band. Alternatively, the BS may identify in the system information that LoS MIMO is supported and an LoS MIMO support method for the first frequency band and identify that LoS MIMO is not supported for the second frequency band.

After receiving the system information, each UE identifies LoS MIMO-related configuration information (S920). If the LoS MIMO-related configuration information indicates LoS MIMO support, the transmitting UE and the receiving UE transmit and receive sidelink signals based on LoS MIMO (S930). For example, step S940 includes an operation of the transmitting UE generating a sidelink signal for each layer defined by LoS MIMO and an operation of transmitting the sidelink signal to the receiving UE through a corresponding layer. The receiving UE sets a reception antenna thereof to a LoS MIMO mode and receives and decodes the sidelink signal for each layer.

### 2. LoS MIMO setting procedure in radio resource control (RRC) layer

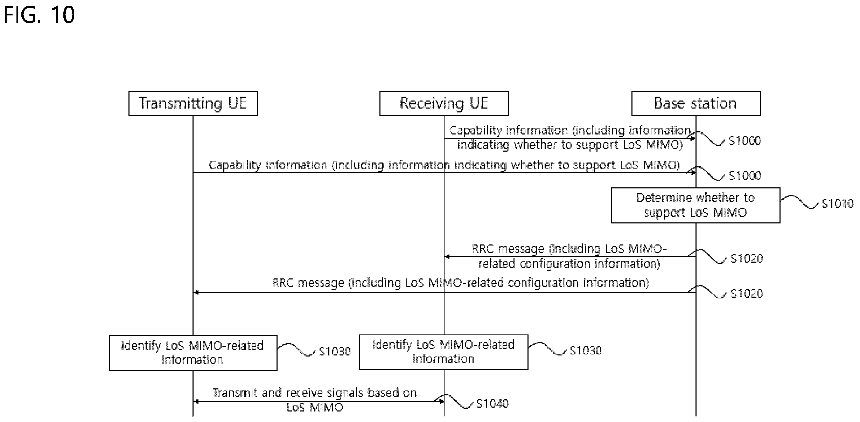

FIG. 10 is a flowchart illustrating a LoS MIMO setting procedure for a sidelink according to another example. FIG. 10 shows an embodiment in which a BS transmits an RRC message to a transmitting UE and a receiving UE.

Referring to FIG. 10, the transmitting UE and the receiving UE may transmit capability information indicating whether LoS MIMO is supported to the BS (S1000). If LoS MIMO is possible between the BS and the UE and if LoS MIMO has various options, a procedure is required to check information on what LoS MIMO may be supported. The capability information may indicate which of various LoS MIMO methods the transmitting UE and the receiving UE will support. Here, various LoS MIMO methods may include linear polarization antenna (vertical-horizontal, cross polarization (X-pole, ±45 degrees)), circular polarization antenna (left-circular, right-circular), elliptical polarization antenna (elliptical polarization), or one or more of other complex methods. For example, the capability information may indicate support for LoS MIMO based on vertical-horizontal polarization. If vertical-horizontal polarization and X-polarization are distinguished, the UE may support up to 4 layers with LoS MIMO. In this case, the capability information may indicate support for both vertical-horizontal polarization and X-polarization.

The BS may determine whether to support LoS MIMO mode for the transmitting UE and the receiving UE (S1010). Step S1010 may be omitted in some cases. The BS generates an RRC message including LoS MIMO-related configuration information and transmits the same to the transmitting UE and the receiving UE (S1020).

If the BS determines not to support LoS MIMO operation in step S1010, the RRC message may not include the LoS MIMO-related configuration information.

As an example, the LoS MIMO-related configuration information included in the RRC message in step S1020 may be configuration information for LoS MIMO.

As another example, the LoS MIMO-related configuration information included in the RRC message in step S1020 may be detailed configuration information for LoS MIMO, and basic configuration information for LoS MIMO may be transmitted in advance through system information. For example, if LoS MIMO-related configuration information is A and B, A may be basic configuration information for LoS MIMO and may be transmitted in the system information, and B may be detailed configuration information for LoS MIMO and may be transmitted in RRC signaling after RRC connection.

If the UE supports multiple frequency bands, the BS may vary whether LoS MIMO is supported and a support method for each frequency band. In this case, the BS may include the information in the RRC message to transmit the information. For example, it is assumed that the UE supports the first frequency band and the second frequency band. The BS may identify in the RRC message that LoS MIMO is supported for the first frequency band and that LoS MIMO is not supported for the second frequency band. Alternatively, the BS may identify in the RRC message that LoS MIMO is supported for the first frequency band and a method of supporting LoS MIMO and may identify that LoS MIMO is not supported for the second frequency band.

The transmitting UE and the receiving UE receive the RRC message from the BS and then identify LoS MIMO-related configuration information (S1030). If the LoS MIMO-related configuration information indicates LoS MIMO support, the transmitting UE and the receiving UE may transmit and receive signals based on LoS MIMO (S1040). Here, the signals transmitted and received in step S1040 include sidelink reference signals, such as SL CSI-RS and SL DM-RS, and sidelink physical channels, such as PSBCH, PSDCH, PSCCH, PSSCH, and PSFCH, described above.

The BS may determine whether the transmitting UE and the receiving UE have the capability to support LoS MIMO based on the capability information of the transmitting UE and the receiving UE. However, the transmitting UE and receiving UE cannot know whether they supports LoS MIMO from each other. In this case, a protocol is required for the transmitting UE and the receiving UE to recognize whether LoS MIMO is supported therebetween.

As an example, the LoS MIMO-related configuration information sent by the BS to the transmitting UE in step S 1020 may further include information on whether the receiving UE supports LoS MIMO. In addition, the LoS MIMO-related configuration information sent by the BS to the receiving UE in step S 1020 may further include information on whether the transmitting LTE supports LoS MIMO.

As another example, the transmitting LTE may transmit an SL CSI-RS for LoS MIMO to the receiving UE and then determine whether the receiving UE supports LoS MIMO based on feedback information from the receiving UE. A pattern, antenna port, and occupied resources of SL CSI-RS for LoS MIMO are different from a pattern, antenna port, and occupied resources of legacy CSI-RS and may be distinguished from each other.

As another example, it is also possible to use the same pattern, antenna port, and occupied resources of the SL CSI-RS for LoS MIMO as the pattern, antenna port, and occupied resources of the legacy CSI-RS.

If the receiving UE does not support LoS MIMO, feedback information on CSI-RS for LoS MIMO is not transmitted. The transmitting UE recognizes a situation in which feedback information on CSI-RS for LoS MIMO is not received as a situation in which the receiving UE does not support LoS MIMO. That is, the transmitting UE may implicitly determine whether the receiving UE supports LoS MIMO without separate signaling from the receiving UE.

Meanwhile, the transmitting LTE may inform the receiving LTE that it supports LoS MIMO using the system information shown in FIG. 8 and set the sidelink between the transmitting UE and the receiving UE to the LoS MIMO mode.

In addition, step S 1040 includes an operation of the transmitting UE generating a sidelink signal for each layer defined by LoS MIMO and an operation of transmitting the sidelink signal to the receiving UE through a corresponding layer. The receiving UE sets a reception antenna thereof to the LoS MIMO mode, and receives and decodes the sidelink signal for each layer.

The present disclosure may include a LoS MIMO setting procedure in another embodiment in which step S1000 of FIG. 10 is omitted.

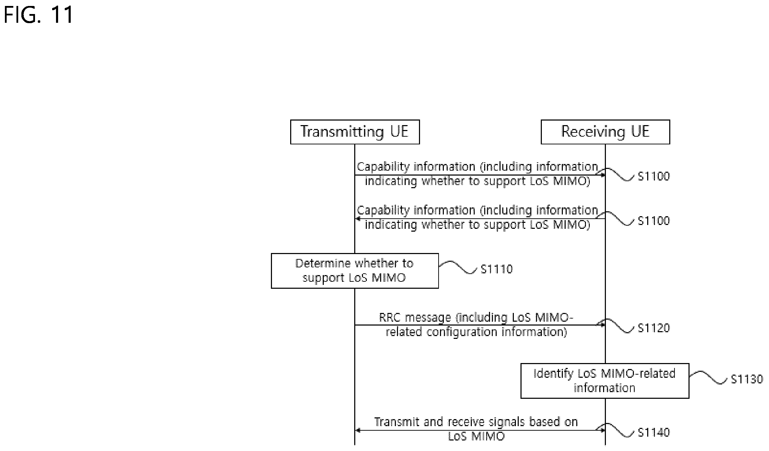

FIG. 11 is a flowchart illustrating a LoS MIMO setting procedure for a sidelink according to another example. FIG. 11 is an embodiment in which a transmitting UE and a receiving UE exchange RRC messages.

Referring to FIG. 11, the transmitting UE and the receiving UE may exchange capability information indicating whether LoS MIMO is supported (S1000). If LoS MIMO is possible between the BS and the UE and if LoS MIMO has various options, a procedure is required to check information on what LoS MIMO may be supported. The capability information may indicate which of various LoS MIMO methods the transmitting UE and the receiving UE will support. Here, various LoS MIMO methods may include linear polarization antenna (vertical-horizontal, cross polarization (X-pole, ±45 degrees)), circular polarization antenna (left-circular, right-circular), elliptical polarization antenna (elliptical polarization), or one or more of other complex methods. For example, the capability information may indicate support for LoS MIMO based on vertical-horizontal polarization. If vertical-horizontal polarization and X-polarization are distinguished, the UE may support up to 4 layers with LoS MIMO. In this case, the capability information may indicate support for both vertical-horizontal polarization and X-polarization.

The transmitting UE may determine whether to support LoS MIMO mode to the receiving UE (S1110). Step S1110 may be omitted in some cases. The transmitting UE generates an RRC message including LoS MIMO-related configuration information and transmits it to the receiving UE (S1120).

If the transmitting UE determines not to support LoS MIMO operation in step S1110, the RRC message may not include LoS MIMO-related configuration information.

As an example, the LoS MIMO-related configuration information included in the RRC message in step S1120 may be configuration information for LoS MIMO.

As another example, the LoS MIMO-related configuration information included in the RRC message in step S1120 may be detailed configuration information for LoS MIMO, and basic configuration information for LoS MIMO may be transmitted in advance through system information. For example, if LoS MIMO-related configuration information is A and B, A may be basic configuration information for LoS MIMO and may be transmitted in the system information, and B may be detailed configuration information for LoS MIMO and may be transmitted in RRC signaling after RRC connection.

If the transmitting UE supports multiple frequency bands, the transmitting UE may vary whether LoS MIMO is supported and a support method for each frequency band. In this case, the transmitting UE may include the information in the RRC message to transmit the information. For example, it is assumed that the transmitting UE supports the first frequency band and the second frequency band. The transmitting UE may identify in the RRC message that LoS MIMO is supported for the first frequency band and that LoS MIMO is not supported for the second frequency band. Alternatively, the transmitting UE may identify in the RRC message that LoS MIMO is supported for the first frequency band and a method of supporting LoS MIMO and may identify that LoS MIMO is not supported for the second frequency band.

The receiving UE receives the RRC message from the transmitting UE and identifies the LoS MIMO-related configuration information (S1130). If the LoS MIMO-related configuration information indicates LoS MIMO support, the transmitting UE and the receiving UE may transmit and receive signals based on LoS MIMO (S1140). Here, the signals transmitted and received in step S1140 include sidelink reference signals, such as SL CSI-RS and SL DM-RS, and sidelink physical channels, such as PSBCH, PSDCH, PSCCH, PSSCH, and PSFCH described above.

### 3. LoS MIMO control procedure in MAC layer

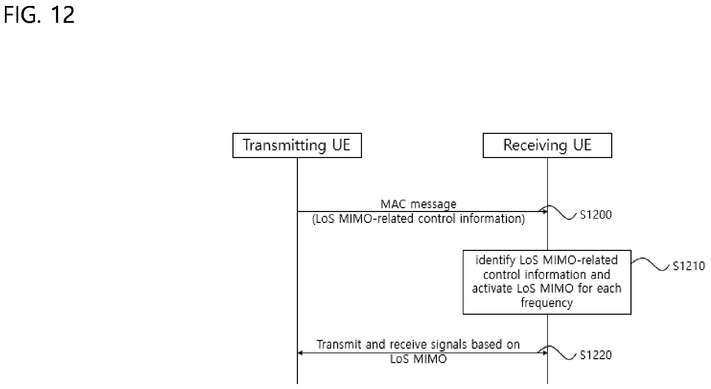

FIG. 12 is a flowchart illustrating a LoS MIMO control procedure for sidelink according to an example.

Referring to FIG. 12, when LoS MIMO-related configuration is completed for the transmitting UE and the receiving UE, the transmitting UE may transmit LoS MIMO control information indicating whether to activate or deactivate the LoS MIMO mode to the receiving UE (S1200). Here, a LoS MIMO-related preset procedure may be performed by any one of the methods of FIGS. 8 to 9 described above.

As an example, the LoS MIMO-related control information may be included in a MAC message or MAC control element (CE). For example, if the transmitting UE supports multiple frequency bands, the LoS MIMO-related control information may indicate activation/deactivation of the LoS MIMO mode for each frequency band. Alternatively, if the transmitting UE supports carrier aggregation (CA), the LoS MIMO-related control information may indicate activation/deactivation of the LoS MIMO mode for each serving cell.

The receiving UE that receives the MAC message may identify the LoS MIMO control information and activate or deactivate the LoS MIMO mode according to an indication of the LoS MIMO control information (S1210).

Alternatively, the receiving UE that receives the MAC message may identify the LoS MIMO control information and activate or deactivate the LoS MIMO mode for each frequency or serving cell according to the instruction of the LoS MIMO control information.

If the LoS MIMO-related control information indicates activation of the LoS MIMO mode, the transmitting UE transmits and receives signals with the receiving UE based on LoS MIMO (S1220). Step S1220 includes an operation of the transmitting UE generating a sidelink signal for each layer defined by LoS MIMO and an operation of transmitting the sidelink signal to the receiving UE through a corresponding layer. The receiving UE sets a reception antenna thereof to the LoS MIMO mode and receives and decodes the sidelink signal for each layer.

### 4. LoS MIMO control procedure in physical layer

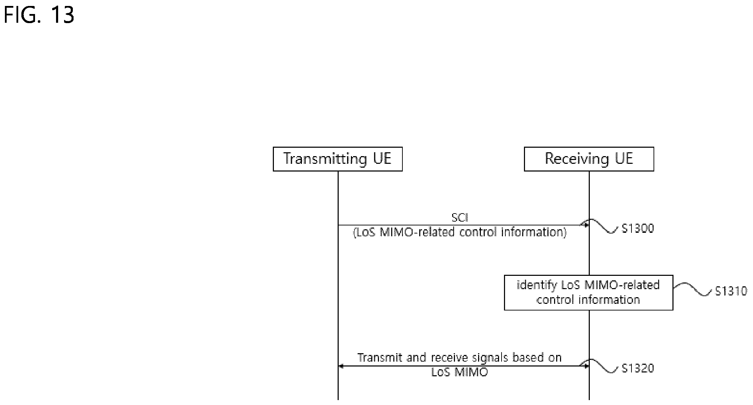

FIG. 13 is a flowchart illustrating a LoS MIMO control procedure for sidelink according to another example.

Referring to FIG. 13, when LoS MIMO-related configuration is completed, the transmitting UE may transmit LoS MIMO control information to the receiving UE (S1300). Here, a pre-setting procedure related to LoS MIMO may be performed by any of the methods of FIGS. 8 to 12 described above, and the activation/deactivation procedure of the LoS MIMO mode may be performed by the method of FIG. 10.

As an example, the LoS MIMO-related control information may be included in sidelink control information (SCI). For example, the LoS-related control information included in the SCI (i.e. SL grant) for sidelink scheduling may include at least some of the number of layers in the sidelink LoS MIMO mode, a MCS level for each layer, beam information (a TCI state value, etc.) when beamforming is applied to the sidelink LoS MIMO, precoding in the sidelink LoS MIMO mode, and transmission mode information indicating sidelink LoS MIMO. Here, the existing PMI may not be used in the LoS MIMO system. In this case, the PMI value may refer to information related to precoding applied in the LoS MIMO system.

As another example, the LoS MIMO-related control information may include other physical layer control information for controlling LoS MIMO.

The receiving UE that receives the SCI may identify the LoS MIMO control information and activate or deactivate the LoS MIMO mode according to an indication of the LoS MIMO control information (S1310).

Alternatively, the UE that receives the SCI may identify the LoS MIMO control information and activate or deactivate the LoS MIMO mode for each frequency or each serving cell according to the indication of the LoS MIMO control information.

If the LoS MIMO-related control information indicates activation of the LoS MIMO mode, the transmitting UE and the receiving UE transmit and receive sidelink signals based on LoS MIMO (S 1320). Step S 1320 includes an operation of the transmitting UE generating a sidelink signal for each layer defined by LoS MIMO and an operation of transmitting the sidelink signal to the receiving UE through a corresponding layer. The receiving UE sets a reception antenna thereof to the LoS MIMO mode and receives and decodes the sidelink signal for each layer.

### 5. Design of a new sidelink (SL) DM-RS for LoS MIMO in sidelink

Demodulation reference signal (DM-RS) for LoS MIMO is designed in a different manner from SL DM-RS (hereinafter referred to as legacy SL DM-RS), which is designed for existing beamforming or spatial multiplexing. In other words, the SL DM-RS for LoS MIMO may have DM-RS configuration or pattern, resource mapping method, antenna port settings, and density defined or designed to be different from the legacy SL DM-RS. This means that legacy SL DM-RS and SL DM-RS for LoS MIMO coexist on the resource grid. The SL DM-RS for LoS MIMO is defined separately from the legacy SL DM-RS.

As an example, the SL DM-RS for LoS MIMO may have a specific antenna port number. Among all SL DM-RS antenna port numbers, some may be assigned to the legacy SL DM-RS antenna ports, and others may be assigned to SL DM-RS antenna ports for LoS MIMO. For example, if there are a total of 16 SL DM-RS antenna ports, the legacy SL DM-RS antenna ports may be # 0 to #7, and the SL DM-RS antenna ports for LoS MIMO may be numbers #8 to #15.

In the LoS MIMO system based on a vertical-horizontal (V-H) polarization antenna, the SL DM-RS antenna port for the vertical antenna and the SL DM-RS antenna port for the horizontal antenna may be different. When a vertical-horizontal polarization antenna and an X-polarization antenna are combined or when the number of LoS MIMO layers increases, more SL DM-RS may be added accordingly.

When LoS MIMO and beamforming are combined, the SL DM-RS may be added and used for each beamformed channel.

If a distance between UEs increases, the division of layers for LoS MIMO may not be clear. This may cause deterioration of reception performance. To supplement this, the frequency/time resources of SL DM-RS for LoS MIMO may be designed to be denser compared to the legacy SL CSI-RS. A method may be used to adaptively adjust the density of SL DM-RS for LoS MIMO according to channel conditions or block error rate (BLER). For example, when the distance between UEs exceeds a certain distance, the density of SL DM-RS for LoS MIMO may be increased, and when the division of layers is clear due to a close distance or a good channel condition, the density of SL DM-RS for LoS MIMO may be lowered. However, as the density of SL DM-RS for LoS MIMO increases, the resources that may be allocated to data may decrease, so there is a trade-off in that the transfer rate decreases.

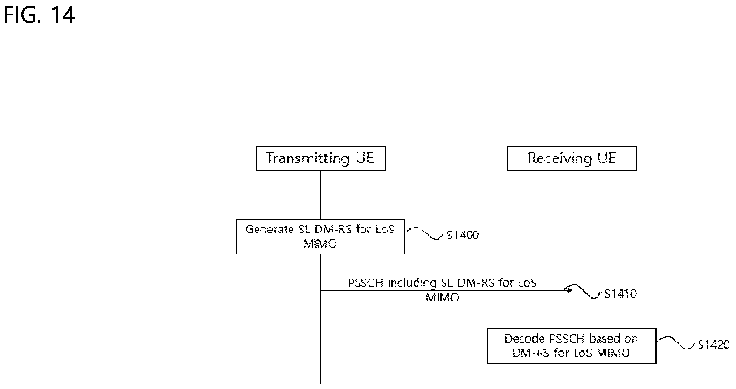

FIG. 14 is a flowchart illustrating a method for transmitting an SL DM-RS according to an example.

Referring to FIG. 14, the transmitting UE generates an SL DM-RS for LoS MIMO (S 1400). Step S 1400 includes an operation of mapping a sequence for the SL DM-RS generated by the transmitting UE to a specific time/frequency resource and layer, an operation of generating a SL signal for each layer defined by LoS MIMO, and an operation of transmitting each SL signal to a UE through a corresponding layer. Here, the process of mapping different data to each layer by applying LoS MIMO may be different from the general SU-MIMO or MU-MIMO.

As an example, the location of the time/frequency resource to which the SL DM-RS is mapped may be determined based on an equation using at least one parameter related to LoS MIMO as a variable. For example, when a polarization value is p, if p=0, the value represents vertical polarization, and if p=1, the value represents horizontal polarization. Based on the equation with the p value as a variable, the time/frequency resource in which SL DM-RS is mapped may be determined.

As another example, in a LoS MIMO system based on a vertical-horizontal (V-H) polarization antenna, the SL DM-RS pattern for the vertical antenna and the SL DM-RS pattern for the horizontal antenna may be different. The SL DM-RS pattern for LoS MIMO may be set in a different manner from the legacy SL DM-RS pattern. This configuration may be performed by separate RRC signaling.

When LoS MIMO and SL beamforming are combined, SL DM-RS may be added and used for each beamformed channel.

The transmitting UE transmits a PSSCH including the SL DM-RS for LoS MIMO to the receiving UE (S1410).

Upon receiving the PSSCH, the receiving UE decodes the PSSCH based on the SL DM-RS for LoS MIMO (S1420). The receiving UE sets a reception antenna thereof to the LoS MIMO mode, performs channel estimation based on the SL DM-RS for LoS MIMO, and then receives and decodes the SL signal for each layer.

### 6. Design of a new SL CSI-RS for LoS MIMO in sidelink

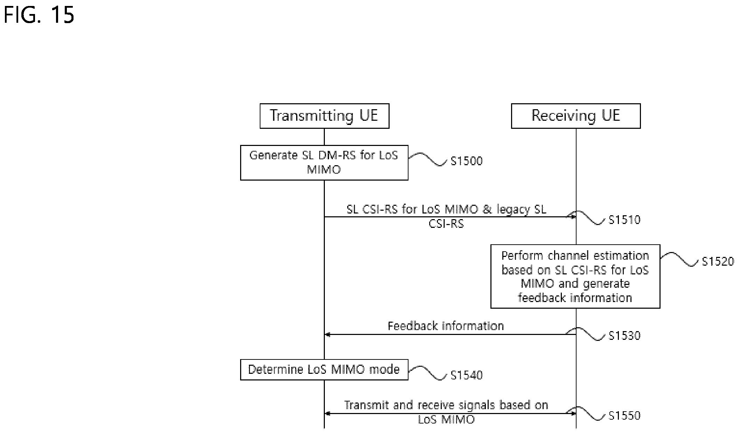

FIG. 15 is a flowchart illustrating a method for transmitting an SL CSI-RS according to an example.

Referring to FIG. 15, the transmitting UE generates an SL CSI-RS for LoS MIMO (S1500). Step S1500 includes an operation of the UE generating a sequence for the SL CSI-RS.

As an example, the SL CSI-RS for LoS MIMO may have a specific antenna port number. Among all SL CSI-RS antenna port numbers, some may be assigned to legacy SL CSI-RS antenna ports, and others may be assigned to SL CSI-RS antenna ports for LoS MIMO. For example, if there are a total of 64 SL CSI-RS antenna ports, the legacy SL CSI-RS antenna ports may be #0 to #31, and the SL CSI-RS antenna ports for LoS MIMO may be #32 to #63.

In the LoS MIMO system based on a vertical-horizontal (V-H) polarization antenna, the SL CSI-RS antenna port for the vertical antenna and the SL CSI-RS antenna port for the horizontal antenna may be different. When a vertical-horizontal polarization antenna and an X-polarization antenna are combined or when the number of LoS MIMO layers increases, more SL CSI-RS may be added accordingly.

When LoS MIMO and beamforming are combined, SL CSI-RS may be used separately.

The transmitting UE transmits the SL CSI-RS for LoS MIMO and the legacy SL CSI-RS to the receiving UE (S1510). Step S1510 includes an operation of the transmitting UE mapping the sequence for the SL CSI-RS generated in step S1500 to a specific time/frequency resource and transmitting the same.

As an example, the location of the time/frequency resource to which the SL CSI-RS is mapped may be determined based on an equation that uses at least one parameter related to LoS MIMO as a variable. For example, when the polarization value is p, if p=0, the value represents vertical polarization, and if p=1, the value represents horizontal polarization. Based on the equation with this p value as a variable, the time/frequence resources at which SL CSI-RS is mapped may be determined.

As another example, in the LoS MIMO system based on a vertical-horizontal (V-H) polarization antenna, the SL CSI-RS pattern for the vertical antenna and the SL CSI-RS pattern for the horizontal antenna may be different. The SL CSI-RS pattern for LoS MIMO may be set in a different manner (SL CSI-RS transmission period, number of times, etc.) from the legacy SL CSI-RS pattern. This configuration may be performed by separate RRC signaling.

The receiving UE performs channel estimation based on SL CSI-RS for LoS MIMO and generates feedback information (S1520). Here, the feedback information may include an indicator indicating whether LoS MIMO is possible and at least some of a precoding matrix indicator (PMI), a rank indicator (RI), and a channel quality indicator (CQI), as a channel state information report. The receiving UE may transmit the number of available layers, a channel status measurement value (CQI, etc.) for each layer, a candidate PMI value, etc. to the transmitting UE using the SL CSI-RS for LoS MIMO.

The method of performing channel estimation based on the SL CSI-RS for LoS MIMO may be different from A channel estimation method based on the legacy SL CSI-RS.

In the case of channel estimation based on the legacy SL CSI-RS, the receiving UE calculates a rank based on the existing MIMO antenna structure and the legacy SL CSI-RS. In the LoS situation, the rank is 1, so the receiving UE generates feedback information indicating rank indicator=1 and reports the same to the transmitting UE, and the transmitting UE cannot perform SM.

Meanwhile, in the case of channel estimation based on the SL CSI-RS for LoS MIMO, the receiving UE calculates a first rank based on the legacy SL CSI-RS and a second rank based on the SL CSI-RS for LoS MIMO. In a LoS situation, the first rank is 1, but the second rank may be greater than 1. The receiving UE generates feedback information with the first rank indicator=1 and the second rank indicator > 1 and reports the same to the transmitting UE. In other words, the receiving UE measures how many layers may be distinguished for LoS MIMO, and calculates and reports the channel status value (e.g., CQI value) of each layer. Also, the transmitting UE may determine whether LoS MIMO may be performed, the number of layers when performing LoS MIMO, and an MCS level for each layer based on the second rank indicator, and perform SM based on LoS MIMO.

Meanwhile, in the case of using LoS MIMO, beamforming may be applied to each layer (or each polarization), so the codebook and precoding for the case of applying LoS MIMO may be used. In this case, the codebook and precoding for LoS MIMO are designed to be different from legacy beamforming or SM, and an RF chain or connection path of the transceiver-RF-antenna for actual implementation may be different.

For example, in the case of LoS MIMO based on vertical-horizontal polarization antennas, a transmitter performs first beamforming using multiple vertical antennas and performs second beamforming that is different from the first beamforming using multiple horizontal antennas. In this case, the codebook and/or precoding matrix for vertical polarization and horizontal polarization may be applied separately.

Here, a separate SL DM-RS for LoS MIMO is required to coherently demodulate the signals transmitted to each layer.

The receiving UE transmits feedback information to the transmitting UE (S1530).

The transmitting UE determines whether to apply LoS MIMO (or whether to switch to LoS MIMO mode) based on the feedback information (S1540).

If it is determined to apply LoS MIMO, the transmitting UE transmits and receives signals with the receiving UE based on LoS MIMO (S1550). In the case of sidelink transmission, step S1550 includes an operation of the transmitting UE generating a sidelink signal for each layer defined by LoS MIMO and an operation of transmitting each sidelink signal to the receiving UE through a corresponding layer. The UE sets a reception antenna thereof to the LoS MIMO mode and receives and decodes the sidelink signal for each layer.

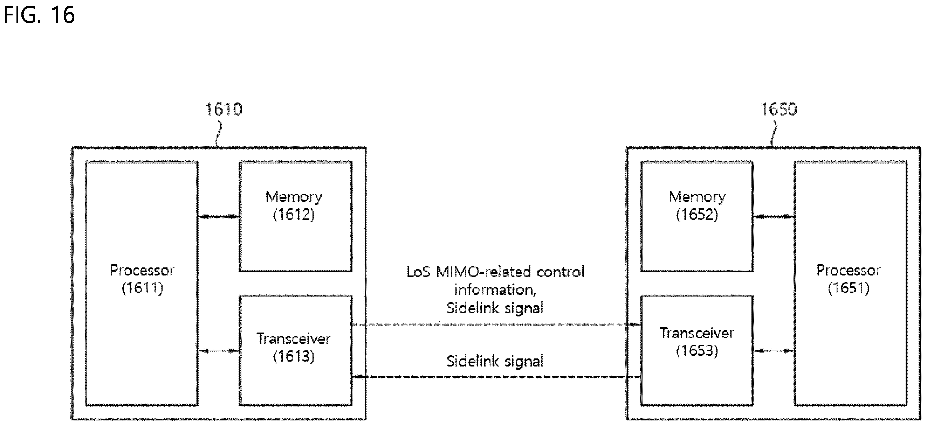

FIG. 16 shows a transmitting UE and a receiving UE in which an embodiment of the present disclosure is implemented.

Referring to FIG. 16, a transmitting UE 1600 includes a processor 1611, a memory 1612, and a transceiver 1613. The processor 1611 may be configured to implement functions, processes and/or methods described herein. Layers of an air interface protocol may be implemented in the processor 1611. For example, the processor 1611 may process the LoS MIMO-related configuration information and/or LoS MIMO-related control information of the transmitting UE according to FIGS. 8 to 11.

The memory 1612 is connected to the processor 1611 and stores various information for driving the processor 1611. The transceiver 1613 is connected to the processor 1611 and transmits a sidelink signal to the receiving UE 1650 in the LoS MIMO mode or receives a sidelink signal from the receiving UE 1650 in the LoS MIMO mode. The transceiver 1613 includes a linear polarization antenna (vertical-horizontal, cross polarization (X-pole, ±45 degrees)), a circular polarization antenna (left-circular, right-circular), and an elliptical antenna (elliptical polarization), or one or more of complex methods additionally.

The receiving UE 1650 includes a processor 1651, a memory 1652, and a transceiver 1653. The processor 1651 may be configured to implement functions, processes and/or methods described herein. Layers of the air interface protocol may be implemented in the processor 1651. The memory 1652 is connected to the processor 1651 and stores various information for driving the processor 1651. The transceiver 1653 is connected to the processor 1651 and transmits a sidelink signal to the transmitting UE 1600 or receives a sidelink signal from the transmitting UE 1600.

The processors 1611 and 1651 may include application-specific integrated circuits (ASICs), other chipsets, logic circuits, and/or data processing devices. The memories 1612 and 1652 may include read-only memory (ROM), random access memory (RAM), flash memory, memory cards, storage medium, and/or other storage devices. The transceivers 1613 and 1653 may include a baseband circuit for processing radio frequency signals. When an embodiment is implemented in software, the aforementioned techniques may be implemented as modules (processes, functions, etc.) that perform the aforementioned functions. Modules may be stored in the memories 1612 and 1652 and executed by the processors 1611 and 1651. The memories 1216 and 1652 may be internal or external to the processors 1611 and 1651, and may be connected to the processors 1611 and 1651 by various well-known elements.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method performed by a first user equipment in a wireless communication system supporting line of sight (LoS) multiple input multiple output (MIMO), the method comprising:
receiving configuration information related to the LoS MIMO from a base station, and
performing sidelink communication based on the LoS MIMO with a second user equipment based on the configuration information,
wherein the LoS MIMO is MIMO that supports LoS-based multiple layer transmission and reception, and
wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

2. The method of claim 1, wherein the configuration information indicates some or all of a rank related to at least one of the LoS MIMO transmission and the LoS MIMO reception, information related to precoding related to at least one of the LoS MIMO transmission and the LoS MIMO reception, and a modulation and coding scheme (MCS) related to the plurality of transmission signals and the plurality of reception signals.

3. The method of claim 1, wherein the configuration information indicates a frequency band in which the LoS MIMO transmission and the LoS MIMO reception are supported.

4. The method of claim 3, wherein the first user equipment performs the LoS MIMO transmission and the LoS MIMO reception on the frequency band.

5. The method of claim 1, wherein the configuration information is transmitted through at least one of a radio resource control (RRC) message, a medium access controlcontrol element (MAC-CE), and downlink control information (DCI).

6. The method of claim 1, wherein the configuration information is transmitted through a system information block or a master information block.

7. The method of claim 1, wherein the plurality of transmission antennas and the plurality of reception antennas are configured based on at least one of a vertical-horizontal polarization structure, a cross polarization structure, a circular structure, and an elliptical polarization structure.

8. A first user equipment (UE), in a wireless communication system supporting line of sight (LoS) multiple input multiple output (MIMO), the first user equipment comprising:
one or more memories storing instructions;
one or more transceivers; and
one or more processors connecting the one or more memories to the one or more transceivers,
wherein the one or more processors are configured to execute the instructions to
receive configuration information related to the LoS MIMO from a base station, and
perform sidelink communication based on the LoS MIMO with a second user equipment based on the configuration information,
wherein the LoS MIMO is MIMO that supports LoS-based multiple layer transmission and reception, and
wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

9. The first UE of claim 8, wherein the configuration information indicates some or all of a rank related to at least one of the LoS MIMO transmission and the LoS MIMO reception, information related to precoding related to at least one of the LoS MIMO transmission and the LoS MIMO reception, and a modulation and coding scheme (MCS) related to the plurality of transmission signals and the plurality of reception signals.

10. The first UE of claim 8, wherein the configuration information indicates a frequency band in which the LoS MIMO transmission and the LoS MIMO reception are supported.

11. The first UE of claim 10, wherein the first user equipment performs the LoS MIMO transmission and the LoS MIMO reception on the frequency band.

12. The first UE of claim 8, wherein the configuration information is transmitted through at least one of a radio resource control (RRC) message, a medium access controlcontrol element (MAC-CE), and downlink control information (DCI).

13. The first UE of claim 8, wherein the configuration information is transmitted through a system information block or a master information block.

14. The first UE of claim 8, wherein the plurality of transmission antennas and the plurality of reception antennas are configured based on at least one of a vertical-horizontal polarization structure, a cross polarization structure, a circular structure, and an elliptical polarization structure.

15. An apparatus configured to control a first user equipment in a wireless communication system supporting line of sight (LoS) multiple input multiple output (MIMO), the apparatus comprising:
one or more processors; and
one or more memories connected to executable by the one or more processors and storing instructions,
wherein the one or more processors are configured to execute the instructions to
receive configuration information related to the LoS MIMO from a base station, and
perform sidelink communication based on the LoS MIMO with a second user equipment based on the configuration information,
wherein the LoS MIMO is MIMO that supports LoS-based multiple layer transmission and reception, and
wherein the sidelink communication includes LoS MIMO transmission in which a plurality of transmission signals are transmitted using a plurality of transmission antennas of the first user equipment and LoS MIMO reception in which a plurality of reception signals are received using a plurality of reception antennas in the first user equipment.

16. The apparatus of claim 15, wherein the configuration information indicates some or all of a rank related to at least one of the LoS MIMO transmission and the LoS MIMO reception, information related to precoding related to at least one of the LoS MIMO transmission and the LoS MIMO reception, and a modulation and coding scheme (MCS) related to the plurality of transmission signals and the plurality of reception signals.

17. The apparatus of claim 15, wherein the configuration information indicates a frequency band in which the LoS MIMO transmission and the LoS MIMO reception are supported.

18. The apparatus of claim 17, wherein the first user equipment performs the LoS MIMO transmission and the LoS MIMO reception on the frequency band.

19. The apparatus of claim 15, wherein the configuration information is transmitted through at least one of a radio resource control (RRC) message, a medium access control-control element (MAC-CE), and downlink control information (DCI).

20. The apparatus of claim 15, wherein the configuration information is transmitted through a system information block or a master information block.
